# EUROPÄISCHE PATENTSCHRIFT

(11) **EP 3 290 264 B1**
(45) Veröffentlichungstag und Bekanntmachung des Hinweises auf die Patenterteilung: **18.03.2020**
(21) Anmeldenummer: 17188085.9
(22) Anmeldetag: 28.08.2017
(51) Int. Cl.: B60P 1/00

(54) **TRANSPORTWAGEN**
CONVEYOR TROLLEY
CHARIOT DE TRANSPORT

(30) Priorität: 29.08.2016 DE 102016010331
(43) Veröffentlichungstag der Anmeldung: 07.03.2018
(73) Patentinhaber: Conow Anhängerbau GmbH & Co. KG, 17258 Feldberger Seenlandschaft (DE)
(72) Erfinder: Buschatz, Dieter, 17258 Feldberger Seenlandschaft (DE); Lange, Ralf, 17258 Feldberger Seenlandschaft (DE)
(74) Vertreter: Bischof, Oliver

(56) Entgegenhaltungen:
- DE-U1-202007 019 318
- DE-U1-202013 008 198
- DE-U1-202013 105 357

## Beschreibung

Die Erfindung betrifft einen Transportwagen gemäß dem Oberbegriff des Anspruchs 1. Transportwagen der eingangs genannten Art werden insbesondere in der Landwirtschaft eingesetzt und sind dort insbesondere als Transportwagen für den Transport von Stückgut in Form von Heu-oder Strohballen bekannt.

Transportwagen der eingangs genannten Art verfügen über eine Ladeplattform mit einer Ladefläche sowie eine Stirn- und Rückwand. Zudem weisen Sie mindestens eine bewegbare Seitenwand auf, die mittels einer zumeist hydraulisch betriebenen Führung in Form von Kinematikrohren und Kinematikstangen nach unten neben den Transportwagen abgesenkt werden kann. Hierdurch wird eine Beladestellung geschaffen, durch die das Beladen des Transportwagens mit dem Stückgut vereinfacht wird. Transportwagen der eingangs genannten Art zeichnen sich häufig auch dadurch aus, dass zwischen Ladeplattform und der bewegbaren Seitenwand ein Abstand gegeben ist, d.h. die Seitenwand im unteren Bereich des Stückguts an dem Stückgut nicht anliegt und das Stückgut somit von der Seitenwand in diesem Bereich nicht geklemmt wird. Einen derartigen Transportwagen offenbart die DE 20 2007 019 318 U1. Transportwagen mit hochschwenkbaren Seitenwänden, d. h. mit Seitenwänden, die mittels eines Hubmittels über die Stirn- und Rückwand hinaus hochschwenkbar sind, offenbaren beispielweise die DE 20 2013 105 357 U1 und die DE 20 2013 008 198 U1.

In jüngster Vergangenheit sind die Transportwagen weiter verbessert worden, um deren Fahrsicherheit zu erhöhen. Hierzu zählen auch Anschläge, an denen die bewegbare Seitenwand anliegt und die zwischen der Stirn- und Rückseite sowie der bewegbaren Seitenwand angeordnet und infolgedessen von der Stirn- und Rückwand nach außen gerichtet sind. Derartige Anschläge, die nicht integraler Bestandteil der Stirn- und Rückwand sind, sind oberhalb der Ladeplattform angeordnet und bilden einen Abstand zwischen der Stirn- und Rückwand sowie der beweglichen Seitenwand. Diese Anschläge haben den Vorteil, dass die Seitenwand während der Fahrt des Transportwagens keinen allzu großen Schwingungen ausgesetzt ist, die die Fahrsicherheit beeinträchtigen können.

Ausgehend von einem Transportwagen der eingangs Art ist es Aufgabe der vorliegenden Erfindung, die Fahrsicherheit, aber auch die Einsatzmöglichkeiten, dieses Transportwagens weiter zu erhöhen. Diese Aufgabe wird mit den Merkmalen des Anspruchs 1 gelöst. Vorteilhafte Ausgestaltungen der Erfindung manifestieren sich in den Unteransprüchen.

Gemäß der Erfindung wird also eine bewegbare Seitenwand, die an einem Anschlag eines Transportwagens anliegt, nach oben geschwenkt. Der Anschlag ist dabei nicht integraler Bestandteil der Stirn- und Rückwand, d.h. unter- und oberhalb des Anschlags befinden sich keine Teile oder Bereiche der Stirn- und Rückwand. Allerdings befindet sich der Anschlag oberhalb eines Teilbereichs der Ladeplattform des Transportwagens.

Hierzu dient auch, dass das Kinematikrohr und die Kinematikstange über Gelenkplatten mit der Stirn- und Rückwand verbunden sind, wobei die Kinematikrohre und die Kinematikstanqen über Gelenke gelenkig an den Gelenkplatten befestigt sind und der Anschlag ein Längsstück sowie parallel angeordnete Querstücke, die zwischen dem Längsstück und der Stirn- und Rückwand angeordnet sind, aufweist.

Dadurch, dass die bewegliche Seitenwand nach oben geschwenkt wird, und zwar über die Stirn- und Rückwand des Transportwagens hinaus, wird die Fahrsicherheit gegenüber den herkömmlichen Transportwagen erhöht, da bei hochgeschwenkten Seitenwänden Kurvenfahrten des Transportwagens besser möglich sind als bei Transportwagen, deren Seitenwände neben den Transportwagen abgesenkt werden. Somit weist der erfindungsgemäße Transportwagen gegenüber Transportwagen aus dem Stand der Technik eine weitere Sicherheitskomponente auf: Neben dem Anschlag eine über die Stirn- und Rückwand hinaus hochschwenkbare Seitenwand. Eine grundlegende Idee der Erfindung ist es also, Anschläge, die nicht integraler Bestandteil der Stirn-und Rückwand ist, mit hochschwenkbaren Seitenwänden in Verbindung zu bringen, um die Fahrsicherheit weiter zu erhöhen.

Eine vorteilhafte Weitergestaltung der Erfindung sieht vor, dass das Hubmittel ein mit einem Hubkolben versehener Hubzylinder ist, der hydraulisch oder pneumatisch betätigt ist. Für die die Versorgung mit einem Fluid ist der Transportwagen vorzugsweise mit einem Hydrauliksystem ausgestattet.

Unter dem Gesichtspunkt von Materialeinsparungen bei gleichzeitiger konstruktiver Stabilität ist es von Vorteil, dass sich die Rückwand aus drei vertikal verlaufenden Stäben und zwei horizontal verlaufenden Stäben zusammensetzt, wobei die Stäbe parallel zueinander angeordnet sind und die horizontal verlaufenden Stäbe und die vertikal verlaufenden Stäben miteinander gekreuzt sind. Eine gitterartige bzw. fachwerkartige Struktur von Stirn- und Rückwand sowie Anschlägen hat auch den Vorteil, dass das Stückgut weniger verformt wird.

Die Hubzylinder sind vorzugsweise über Gelenke gelenkig an einer an der Stirn- und Rückwand angeordneten Gelenkplatte befestigt sind. Es hat sich gezeigt, dass eine ausgereifte Konstruktion des erfindungsgemäßen Transportwagens vorliegt, d.h. eine Seitenwand problemlos von einem Anschlag aus hochschwenkbar ist, wenn der Abstand zwischen dem untersten Ende der an dem Anschlag anliegenden Seitenwand und der Ladefläche 11 zwischen 1070 mm und 1130 mm, bevorzugt zwischen 1185mm und 1115 mm, besonders bevorzugt 1100 mm beträgt. Weiterhin sollte der Abstand zwischen der Ladefläche und eines unteren, der Ladefläche zugewandten Querstücks des Anschlags zwischen 1260 mm und 1220 mm, bevorzugt zwischen 1250mm und 1230 mm, besonders bevorzugt 1238 mm betragen. Auch sollte sich der Abstand zwischen dem Gelenk der Kinematikstange und der Ladefläche auf 2540 mm bis 2570 mm, bevorzugt auf 2550 mm bis 2560 mm, besonders bevorzugt auf 2555 mm belaufen. Weiterhin sollte der Abstand zwischen dem Gelenk des Kinematikrohres und der Ladefläche zwischen 2140 mm und 2170 mm, bevorzugt zwischen 2150 mm und 2560 mm, besonders bevorzugt 2157 mm betragen.

Zu einer vorteilhaften konstruktiven Ausgestaltung des erfindungsgemäßen Transportwagens trägt auch bei, wenn der Abstand zwischen dem Gelenk des Hubzylinders und der Ladefläche zwischen 980 mm und 1030 mm, bevorzugt zwischen 995 mm und 1010 mm, besonders bevorzugt 1003 mm beträgt. Vorzugsweise betragen daher die maximalen Hublängen des Hubmittels zwischen 580 mm und 620 mm, bevorzugt zwischen 590 mm und 610 mm, besonders bevorzugt 600 mm. Diese Hublängen haben auch den Vorteil, dass aufgrund von Materialeinsparungen Kostensenkungen erzielt werden.

Weitere konstruktive Lösungen sehen vor, dass der Abstand zwischen dem untersten Ende der maximal hochgeschwenkten Seitenwand und der Ladefläche zwischen 2900 mm und 3300 mm, bevorzugt zwischen 3000 mm und 3200 mm, besonders bevorzugt 3100 mm und der Abstand zwischen dem Gelenk der Kinematikstange und der beweglichen Seitenwand zwischen 1000 mm und 1400 mm, bevorzugt zwischen 1100 mm und 1300 mm, besonders bevorzugt 1147 mm betragen. Konstruktiv von Vorteil ist es auch, wenn sich der Abstand zwischen dem Gelenk (28) des Kinematikrohres und der beweglichen Seitenwand auf 1380 mm bis 1430 mm, bevorzugt auf 1400 mm bis 1420 mm, besonders bevorzugt auf 1411 mm belaufen.

Im Folgenden wird die Erfindung anhand der Zeichnungen der Figuren erläutert. Es zeigt in schematischer Darstellung:
- Fig. 1:: In einer Rückansicht den Transportwagen gemäß der Erfindung und
- Fig. 2:: eine weitere Ausführungsform des Transportwagens aus Figur 1.

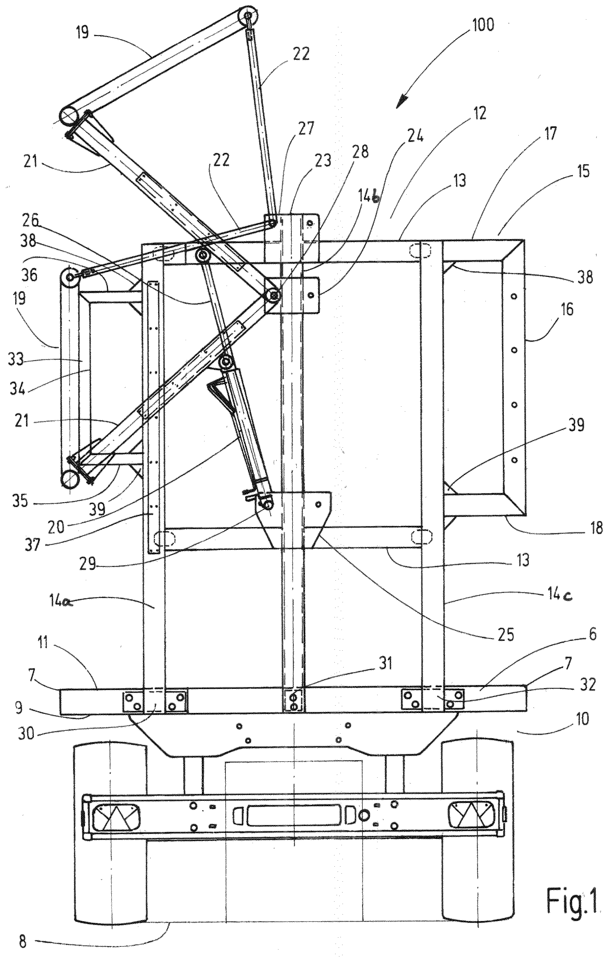

Figur 1 zeigt eine Rückansicht einer Ausführungsform eines Transportwagens, der mit dem Bezugszeichen 100 versehen ist.

Der mit einer hochschwenkbaren Seitenwand 19 ausgestattete Transportwagen 100 weist ein Fahrgestell 10 auf. Oberhalb des Fahrgestells 10 ist eine Ladeplattform 9 mit einer Ladefläche 11 angeordnet, deren Breite die Breite des Fahrgestells 10 übersteigt. Der in Figur 1 dargestellte Transportwagen 100 steht auf einem Grund 8. Der Abstand zwischen Grund 8 und Ladefläche 11 beträgt ca. 1295 mm.

An der Vorder- und Rückseite der Ladefläche 11 sind eine Stirn- und Rückwand angeordnet. Die Rückansicht des Transportwagens 100, die Figur 1 zeigt, veranschaulicht die Rückwand 12 des Transportwagens 100. Die in Figur 1 nicht gezeigte Stirnwand des Transportwagens 100 weist die konstruktive Ausgestaltung der Rückwand 12 auf. Wie aus Figur 1 weiter hervorgeht, ist die Rückwand 12 nicht als geschlossene Fläche ausgebildet. Vielmehr weist die Rückwand 12 die Struktur eines Fachwerks auf, d.h. die Rückwand 12 setzt sich aus drei vertikal verlaufenden Stäben 14a, 14b, 14c und zwei horizontal verlaufenden Stäben 13 zusammen. Die Stäbe 14a, 14b, 14c sind parallel zueinander angeordnet und kreuzen die Stäbe 13.

In der in Figur 1 gezeigten Ausführungsform des Transportwagens 100 ist die Rückwand einteilig ausgebildet. Die Stäbe 13, 14a, 14b, 14c sind miteinander verschweißt. Die vertikal verlaufenden Stäbe 14a, 14b, 14c sind mit der Ladeplattform 9 verbunden. Hierzu sind für die beiden äußeren Stäbe 14a, 14c Beschläge 30, 32 an der Queraußenseite 6 der Ladeplattform 9 vorgesehen, die mit der Ladeplattform 9 mittels von Befestigungsmitteln verbunden sind. Die beiden äußeren Stäbe 14a, 14c sind wiederum über eine Schweißverbindung mit den Beschlägen 30, 32 verbunden. Der mittig in der Rückwand 12 angeordnete vertikal verlaufende Stab 14b ist über Befestigungsmittel 31 an der Queraußenseite 6 mit der Ladeplattform 9 verbunden.

Wie Figur 1 weiter verdeutlicht, befinden sich die beiden äußeren Stäbe 14a, 14c nicht im Bereich der Ecken 7 der Ladepattform 9. Zwischen den Ecken 7 und den beiden äußeren Stäben 14a, 14c befindet sich jeweils ein Teilbereich der Ladeplattform 9, der nicht von der Rückwand 12 begrenzt ist.

Oberhalb des Teilbereichs, der sich auf der Seite der beweglichen Seitenwand 19 befindet, ist ein nach außen des Transportwagens 100 gerichteter Anschlag 33, der mit der Rückwand 12 einteilig ausgebildet ist und nach oben versetzt ist, angeordnet. Der Anschlag 33 bildet somit einen Abstand zwischen der beweglichen Seitenwand 19 und der Rückwand 12. Die in Figur 1 gezeigte Ausführungsform des Anschlags 33 des Transportwagens 100 bilden zusammen mit den Teilstücken des äußeren Stabs 14a die Form eines Rechtecks. Der Anschlag 33 weist ein Längsstück 34 auf, das parallel zu dem äußeren Stab 14a verläuft sowie parallel angeordnete Querstücke 35,36, die zwischen dem Längsstück 34 und dem äußeren Staben 14a angeordnet sind.

An der dem Anschlag 33 gegenüberliegenden Seite des Transportwagens 100 befindet sich an der Rückwand 12 und oberhalb des Teilbereichs der Ladeplattform 9, der nicht von der Rückwand 12 begrenzt ist, ein nach außen gerichteter Vorsprung 15 , der eine rechteckförmige Form aufweist. Auch der Vorsprung 15 weist ein Längsstück 16 auf, das parallel zu dem äußeren Stab 14c verläuft sowie parallel angeordnete Querstücke 17,18, die zwischen dem Längsstück 16 und dem äußeren Stabe 14c angeordnet sind. Im Unterschied zum Anschlag 33 liegt an dem Vorsprung 15 jedoch keine Seitenwand an. Das Längsstück 16 des Vorsprungs 15 ist integraler Bestandteil der zweiten Seitenwand, d.h. der Seitenwand des Transportwagens 100, die der schwenkbaren Seitenwand 19 gegenüberliegt.

An den Ecken, die durch die äußeren Stäbe 14a, 14c und die parallel angeordneten Querstücke 17, 18, 35, 38 gebildet sind, sind Verstärkungen 38, 39, d.h. plattenförmige Gebilde aus Metall, angeordnet. Längs des äußeren Stabs 14a und auf der der Ladefläche 11 abgewandten Seite des äußeren Stabs 14a ist eine weitere Verstärkung 37 angeordnet.

Der Abstand zwischen der Ladefläche 11 und des unteren, der Ladefläche 11 zugewandten Querstücks 35 des Anschlags 33, an dem die hochschwenkbare Seitenwand 19 anliegt, beträgt ca. 1238 mm, wohingegen der Abstand zwischen der Ladefläche 11 und des unteren, der Ladefläche 11 zugewandten Querstücks 18 des Vorsprungs 15, der dem Anschlag 33 auf der anderen Seite des Transportwagens 100 gegenüberliegt ca. 935mm beträgt. Die Länge zwischen der Ladefläche 11 und der Außenseite des oberen, der Ladefläche abgewandten Querstücks 17 des Vorsprungs 15 beläuft sich auf ca. 2455 mm. Die parallel angeordneten Querstücke 17, 18, 35, 38 sowie die Längsstücke 16, 34 sind miteinander verschweißt. Eine Schweißverbindung liegt auch zwischen den äußeren Stäben 14a, 14c und den jeweiligen Querstücken 17, 18, 35, 38 vor.

Der Transportwagen 100 weist zwei Seitenwände auf, von denen in Figur 1 die schwenkbare Seitenwand 19 gezeigt ist. Der Längsabstand zwischen den beiden äußersten Stellen der Seitenwand 19 beträgt ca. 1225 mm. Die der beweglichen Seitenwand 19 gegenüberliegende zweite Seitenwand ist starr, d.h. nichtbewegbar. Beide Seitenwände haben eine offene Struktur, d.h. die Form eines Gitters oder Fachwerks, bei der Längs- und Querstäbe gekreuzt sind. Denkbar ist aber auch, dass beide Seitenwände geschlossene Flächen haben.

Die Verbindung zwischen der beweglichen Seitenwand 19 und der Rückwand 12 ist durch das Kinematikrohr 21 und die Kinemtikstange 22 gegeben.

Mit seinem anderen Ende ist das Kinematikrohr 21 über das Gelenk 28 gelenkig an der Gelenkplatte 24 befestigt. Die Gelenkplatte 24 ist wiederum an dem mittleren Stab 14b der Rückwand 12 befestigt und ist so ausgebildet, dass zwei Kinematikrohre symmetrisch zum mittleren Stab 14b, d.h. links und rechts des mittleren Stabs 14b, gelenkig montiert werden können. Die Länge des Kinematikrohrs 21 von dem Gelenk 28 bis zur beweglichen Seitenwand 19 beläuft sich auf ca. 1411mm, wohingegen sich die Länge des Kinematikrohrs 21 von dem Gelenk 28 bis zum zentrischen Endpunkt des unteren Endes der beweglichen Seitenwand 19 auf ca. 1494 mm beläuft. Der Abstand zwischen dem Gelenk 28 und der Ladefläche 11 beträgt ca. 2157 mm.

Mit seinem anderen Ende ist die Kinematikstange 22 über das Gelenk 27 gelenkig an der Gelenkplatte 23 befestigt. Die Gelenkplatte 23 ist wiederum an dem oberen Ende des mittleren Stabs 14b der Rückwand 12 befestigt und zwar an der Stelle, wo sich der mittlere Stab 14b und der oberste horizontal verlaufende Stab 13, mit dem die Rückwand 12 an ihrem oberen Ende abschließt, kreuzen. Die Gelenkplatte 23 ist so ausgebildet, dass zwei Kinematikstangen symmetrisch zum mittleren Stab 14b, d.h. links und rechts des mittleren Stabs 14b, gelenkig montiert werden können. Die Länge der Kinematikstange 22 von dem Gelenk 27 bis zur beweglichen Seitenwand 19 beläuft sich auf ca. 1050 mm, wohingegen sich die Länge der Kinematikstange 22 von dem Gelenk 27 bis zum zentrischen Endpunkt des oberen Endes der beweglichen Seitenwand 19 auf ca. 1147 mm beläuft. Der Abstand zwischen dem Gelenk 27 und der Ladefläche 11 beträgt ca. 2555 mm.

Wie Figur 1 weiter verdeutlicht, weist der Transportwagen 100 weiterhin ein Hubmittel 20, 26 und zwar in Form eines einen Hubkolben 26 aufweisenden Hubzylinders 20 auf. Der Hubkolben 26 ist starr an dem Kinematikrohr 21 befestigt. Der Hubzylinder 20 ist über das Gelenk 29 gelenkig an der Gelenkplatte 25 befestigt. Die Gelenkplatte 25 ist an dem mittleren Stab 14b befestigt und zwar an der Stelle, wo sich der mittlere Stab 14b und der erste über der Ladeplattform 11 horizontal verlaufende Stab 13 kreuzen. Auch die Gelenkplatte 25 ist so ausgebildet, dass zwei Hubzylinder symmetrisch zum mittleren Stab 14b, d.h. links und rechts des mittleren Stabs 14b, gelenkig montiert werden können. Der Abstand zwischen Gelenk 29 und Ladefläche 11 beträgt ca. 1003 mm. Wenn der Hubkolben 26 eingefahren ist, liegt die bewegliche Seitenwand 19 an dem Anschlag 33 an. In diesem Zustand beträgt der Abstand zwischen dem untersten Ende der Seitenwand 19 und der Ladeplattform 9 ca. 1100 mm. Wenn der Hubkolben 26 dagegen ausgefahren ist, ist die bewegliche Seitenwand hochschwenkbar.

Wie aus Figur 1 weiter hervorgeht, ist die bewegliche Seitenwand 19 bis über die Rückwand 12 hinaus hochschwenkbar und wird dabei von dem Kinematikrohr 21 und der Kinematikstange 22 geführt. In dieser Stellung befindet sich die bewegliche Seitenwand oberhalb der Rückwand 12. In der in Figur1 gezeigten Ausführungsform beträgt die maximale Hublänge des Zylinders ca. 600 mm Bei dieser Hublänge beträgt der Abstand zwischen dem untersten Ende der beweglichen Seitenwand 19 und der Ladefläche 11 ca. 3100 mm, wohingegen sich der Abstand zwischen dem äußersten oberen Ende der beweglichen Seitenwand 19 und dem Grund 8 auf ca. 5045 mm beläuft.

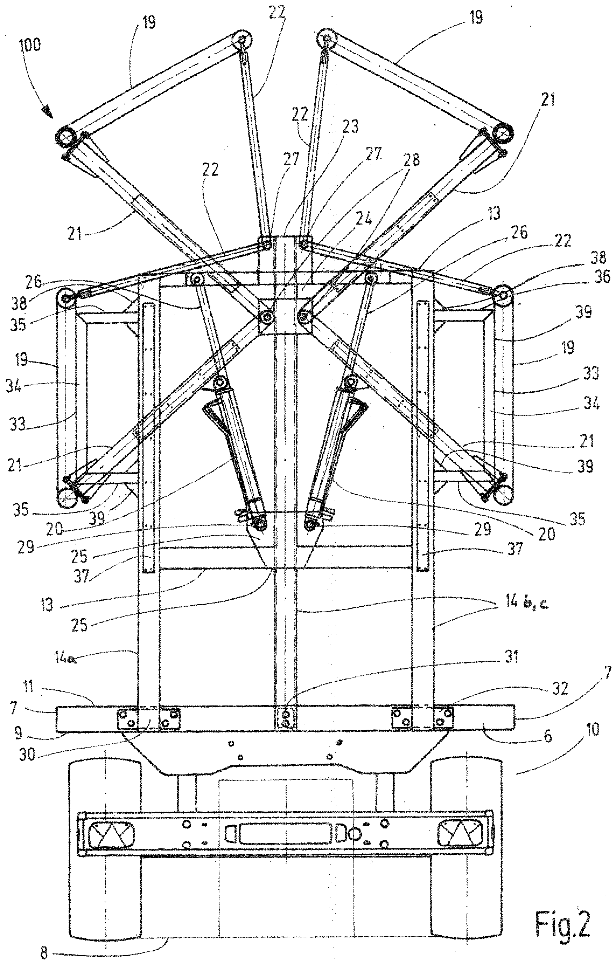

Figur 2 zeigt, dass der Transportwagen 100 beidseitig mit beweglichen Seitenwänden 19, die über die Rückwand 12 (und somit auch über die in Figur 1 und 2 nicht gezeigte Stirnwand des Transportwagens 100) hinaus hochschwenkbar sind, ausgestattet ist. Hierzu ist der der in Figur 1 gezeigte Transportwagen 100 um eine weitere bewegliche Seitenwand 19, einen weiteren Anschlag 33 sowie um einen weiteren einen Hubkolben 26 aufweisenden Hubzylinder 20 erweitert. Zudem ist der in Figur 2 gezeigte Transportwagen 100 um mit einem weiteren Kinematikrohr 21 und einer weiteren Kinematikstange 22 ausgestattet. Die konstruktive Ausgestaltung des Transportwagens 100 für das Hochschwenken der zweiten beweglichen Seitenwand, d.h. der Seitenwand 19, die in der Rückansicht gemäß Figur 2 auf der rechten Seite des Transportwagens angeordnet ist, entspricht der in Figur 1 beschriebenen konstruktiven Ausgestaltung, die auch die in Figur 1 beschriebenen Längen- und Abstandsmaße beinhaltet.

Das für die zweite bewegliche Seitenwand 19 vorgesehene Kinematikrohr 21 sowie die für die weitere zweite bewegliche Seitenwand vorgesehene Kinematikstange 22 sind ebenfalls über Gelenke 27, 28 mit den Gelenkplatten 23, 24 verbunden. Der Abstand zwischen den Gelenken 27, 28 auf den Gelenkplatten 23, 24 beträgt ca. 200 mm. Der weitere Hubzyliner 35 ist über das weitere Gelenk 29 mit der Gelenkplatte 25 verbunden, Hier beträgt der Abstand zwischen den beiden Gelenken 29 ca. 272 mm. Die Gelenke 27, 28, 29 sind dabei symmetrisch zum mittleren Stab 14b angeordnet.

### Bezugszeichenliste

- 100: Transportwagen
- 6: Queraußenseite
- 7: Ecke
- 8: Grund
- 9: Ladeplattform
- 10: Fahrgestell
- 11: Ladefläche
- 12: Rückwand
- 13: Stab
- 14a: Stab
- 14b: Stab
- 14c: Stab
- 15: Vorsprung
- 16: Längsstück
- 17: Querstück
- 18: Querstück
- 19: Seitenwand
- 20: Hubzylinder
- 21: Kinematikrohr
- 22: Kinematikrohr
- 23: Gelenkplatte
- 24: Gelenkplatte
- 25: Gelenkplatte
- 26: Hubkolben
- 27: Gelenk
- 28: Gelenk
- 29: Gelenk
- 30: Beschlag
- 31: Befestigungsmittel
- 32: Beschlag
- 33: Anschlag
- 34: Längsstück
- 35: Querstück
- 36: Querstück
- 37: Verstärkung
- 38: Verstärkung
- 39: Verstärkung

## Patentansprüche

1. Transportwagen (100), aufweisend:
- eine Ladeplattform (9) mit einer Ladefläche (11);
- eine Stirn- und Rückwand (12);
- mindestens eine bewegbare Seitenwand (19);
- mindestens einen an der Stirn- und Rückwand (12) befindlichen Anschlag (33), der zwischen der Stirn- und Rückwand (12) und der bewegbaren Seitenwand (19) angeordnet ist und von der Stirn- und Rückwand (12) nach außen gerichtet ist, sowie
- ein Hubmittel (20, 26,);
- mindestens ein Kinematikrohr (21);
- mindestens eine Kinematikstange (22);
wobei die bewegbare Seitenwand (19) an dem Anschlag (33) anliegt und der Anschlag (33) oberhalb der Ladeplattform (9) angeordnet ist und einen Abstand zwischen der Stirn-und Rückwand (12) sowie der beweglichen Seitenwand (19) bildet sowie
die bewegbare Seitenwand (19) mittels des Hubmittels (20, 26) über die Stirn- und Rückwand (12) hinaus hochschwenkbar ist, wobei die bewegliche Seitenwand (19) von dem Kinematikrohr (21) und der Kinematikstange (22), die mit der Stirn- und Rückwand (12) verbunden sind, geführt ist, **dadurch**
**gekennzeichnet, dass** die Kinematikrohre (21) und die Kinematikstangen (22) über Gelenkplatten (23, 24) mit der Stirn- und Rückwand (12) verbunden sind, wobei die Kinematikrohre (21) und die Kinematikstangen (22) über Gelenke (27, 28) gelenkig an den Gelenkplatten (23, 24) befestigt sind und wobei der Anschlag (33) ein Längsstück (34) sowie parallel angeordnete Querstücke (35,36), die zwischen dem Längsstück (34) und der Stirn- und Rückwand (12) angeordnet sind, aufweist.

2. Transportwagen nach Anspruch 1, **dadurch gekennzeichnet, dass** das Hubmittel (20, 22, 26, 35) ein mit einem Hubkolben (22, 26) versehener Hubzylinder (20, 35) ist, der hydraulisch oder pneumatisch betätigt ist.

3. Transportwagen nach Anspruch 1 oder 2, **dadurch gekennzeichnet, dass** sich die Rückwand (19) aus drei vertikal verlaufenden Stäben (14a, 14b, 14c) und zwei horizontal verlaufenden Stäben (13) zusammensetzt, wobei die Stäbe (14a, 14b, 14c) parallel zueinander angeordnet sind und die horizontal verlaufenden Stäbe (13) und die vertikal verlaufenden Stäbe (14a, 14b, 14c) miteinander gekreuzt sind.

4. Transportwagen nach Anspruch 2 oder 3, **dadurch gekennzeichnet, dass** der Hubzylinder (20, 35) über ein Gelenk (29) gelenkig an einer an der Stirn- und Rückwand (12) angeordneten Gelenkplatte (25) befestigt ist.

5. Transportwagen nach einem der vorhergehenden Ansprüche, **dadurch gekennzeichnet, dass** der Abstand zwischen dem untersten Ende der an dem Anschlag (33) anliegenden Seitenwand (19) und der Ladefläche (11) zwischen 1070 mm und 1130 mm, bevorzugt zwischen 1185mm und 1115 mm, besonders bevorzugt 1100 mm beträgt.

6. Transportwagen nach einem der vorhergehenden Ansprüche, **dadurch gekennzeichnet, dass** der Abstand zwischen der Ladefläche (11) und eines unteren, der Ladefläche (11) zugewandten Querstücks (35) des Anschlags (33) zwischen 1260 mm und 1220 mm, bevorzugt zwischen 1250mm und 1230 mm, besonders bevorzugt 1238 mm beträgt.

7. Transportwagen nach einem der vorhergehenden Ansprüche, **dadurch gekennzeichnet, dass** der Abstand zwischen dem Gelenk (27) der Kinematikstange (22) und der Ladefläche (11) zwischen 2540 mm und 2570 mm, bevorzugt zwischen 2550 mm und 2560 mm, besonders bevorzugt 2555 mm beträgt.

8. Transportwagen nach einem der vorhergehenden Ansprüche, **dadurch gekennzeichnet, dass** der Abstand zwischen dem Gelenk (28) des Kinematikrohres (21) und der Ladefläche (11) zwischen 2140 mm und 2170 mm, bevorzugt zwischen 2150 mm und 2160 mm, besonders bevorzugt 2157 mm beträgt.

9. Transportwagen nach einem der Ansprüche 4 bis 8 **dadurch gekennzeichnet, dass** der Abstand zwischen dem Gelenk (28'9) des Hubzylinders (20,35) und der Ladefläche (11) zwischen 980 mm und 1030 mm, bevorzugt zwischen 995 mm und 1010 mm, besonders bevorzugt 1003 mm beträgt.

10. Transportwagen nach einem der vorhergehenden Ansprüche, **dadurch gekennzeichnet,** die maximale Hublängen des Hubmittels (20, 26) zwischen 580 mm und 620 mm, bevorzugt zwischen 590 mm und 610 mm, besonders bevorzugt 600 mm betragen.

11. Transportwagen nach einem der vorhergehenden Ansprüche, **dadurch gekennzeichnet, dass** der Abstand zwischen dem untersten Ende der maximal hochgeschwenkten Seitenwand (19) und der Ladefläche (11) zwischen 2900 mm und 3300 mm, bevorzugt zwischen 3000 mm und 3200 mm, besonders bevorzugt 3100 mm beträgt.

12. Transportwagen nach einem der vorhergehenden Ansprüche, **dadurch gekennzeichnet, dass** der Abstand zwischen dem Gelenk (27) der Kinematikstange (22) und dem zentrischen Endpunkt des oberen Endes der beweglichen Seitenwand (19) zwischen 1000 mm und 1400 mm, bevorzugt zwischen 1100 mm und 1300 mm, besonders bevorzugt 1147 mm betragt.

13. Transportwagen nach einem der vorhergehenden Ansprüche, **dadurch gekennzeichnet, dass** der Abstand zwischen dem Gelenk (28) des Kinematikrohres (21) und der beweglichen Seitenwand (19) zwischen 1380 mm und 1430 mm, bevorzugt zwischen 1400 mm und 1420 mm, besonders bevorzugt 1411 mm beträgt.

## Claims

1. Transport trolley (100), comprising:
- a loading platform (9) having a loading surface (11);
- a front and rear wall (12);
- at least one movable side wall (19);
- at least one stop (33) which is located on the front and rear wall (12) and is arranged between the front and rear wall (12) and the movable side wall (19) and is directed outwards from the front and rear wall (12), and
- a lifting means (20, 26);
- at least one kinematic tube (21);
- at least one kinematic rod (22);
wherein the movable side wall (19) lies against the stop (33) and the stop (33) is arranged above the loading platform (9) and forms a spaced interval between the front and rear wall (12) and the movable side wall (19), and the movable side wall (19) can be pivoted upwards beyond the front and rear wall (12) by means of the lifting means (20, 26), wherein the movable side wall (19) is guided by the kinematic tube (21) and the kinematic rod (22) which are connected to the front and rear wall (12), **characterised in that** the kinematic tubes (21) and the kinematic rods (22) are connected to the front and rear wall (12) by means of joint plates (23, 24), wherein the kinematic tubes (21) and the kinematic rods (22) are fastened to the joint plates (23, 24) in an articulated manner by means of joints (27, 28) and wherein the stop (33) comprises a longitudinal piece (34) and transverse pieces (35, 36) which are arranged in parallel and are arranged between the longitudinal piece (34) and the front and rear wall (12).

2. Transport trolley as claimed in claim 1, **characterised in that** the lifting means (20, 22, 26, 35) is a lifting cylinder (20, 35) which is provided with a lifting piston (22, 26) and is actuated hydraulically or pneumatically.

3. Transport trolley as claimed in claim 1 or 2, **characterised in that** the rear wall (19) is composed of three vertically extending bars (14a, 14b, 14c) and two horizontally extending bars (13), wherein the bars (14a, 14b, 14c) are arranged in parallel with one another and the horizontally extending bars (13) and the vertically extending bars (14a, 14b, 14c) cross one another.

4. Transport trolley as claimed in claim 2 or 3, **characterised in that** the lifting cylinder (20, 35) is fastened to a joint plate (25), which is arranged on the front and rear wall (12), in an articulated manner by means of a joint (29).

5. Transport trolley as claimed in any one of the preceding claims, **characterised in that** the spaced interval between the lowermost end of the side wall (19), which lies against the stop (33), and the loading surface (11) is between 1070 mm and 1130 mm, preferably between 1185 mm and 1115 mm, particularly preferably is 1100 mm.

6. Transport trolley as claimed in any one of the preceding claims, **characterised in that** the spaced interval between the loading surface (11) and a lower transverse piece (35), facing towards the loading surface (11), of the stop (33) is between 1260 mm and 1220 mm, preferably between 1250 mm and 1230 mm, particularly preferably is 1238 mm.

7. Transport trolley as claimed in any one of the preceding claims, **characterised in that** the spacing between the joint (27) of the kinematic rod (22) and the loading surface (11) is between 2540 mm and 2570 mm, preferably between 2550 mm and 2560 mm, particularly preferably is 2555 mm.

8. Transport trolley as claimed in any one of the preceding claims, **characterised in that** the spaced interval between the joint (28) of the kinematic tube (21) and the loading surface (11) is between 2140 mm and 2170 mm, preferably between 2150 mm and 2160 mm, particularly preferably is 2157 mm.

9. Transport trolley as claimed in any one of claims 4 to 8, **characterised in that** the spaced interval between the joint (28'9) of the lifting cylinder (20, 35) and the loading surface (11) is between 980 mm and 1030 mm, preferably between 995 mm and 1010 mm, particularly preferably is 1003 mm.

10. Transport trolley as claimed in any one of the preceding claims, **characterised in that** the maximum lifting lengths of the lifting means (20, 26) are between 580 mm and 620 mm, preferably between 590 mm and 610 mm, particularly preferably is 600 mm.

11. Transport trolley as claimed in any one of the preceding claims, **characterised in that** the spaced interval between the lowermost end of the side wall (19), which is pivoted upwards to the maximum extent, and the loading surface (11) is between 2900 mm and 3300 mm, preferably between 3000 mm and 3200 mm, particularly preferably is 3100 mm.

12. Transport trolley as claimed in any one of the preceding claims, **characterised in that** the spaced interval between the joint (27) of the kinematic rod (22) and the central end point of the upper end of the movable side wall (19) is between 1000 mm and 1400 mm, preferably between 1100 mm and 1300 mm, particularly preferably is 1147 mm.

13. Transport trolley as claimed in any one of the preceding claims, **characterised in that** the spaced interval between the joint (28) of the kinematic tube (21) and the movable side wall (19) is between 1380 mm and 1430 mm, preferably between 1400 mm and 1420 mm, particularly preferably is 1411 mm.

## Revendications

1. Chariot de transport (100) présentant :
- une plate-forme de chargement (9) avec une surface de chargement (11) ;
- une paroi avant et arrière (12) ;
- au moins une paroi latérale (19) pouvant être déplacée ;
- au moins une butée (33) se trouvant au niveau de le paroi avant et arrière (12), qui est disposée entre la paroi avant et arrière (12) et la paroi latérale (19) pouvant être déplacée et est dirigée vers l'extérieur depuis la paroi avant et arrière (12), ainsi que
- un moyen de levage (20, 26) ;
- au moins un tube cinématique (21) ;
- au moins une barre cinématique (22) ;
dans lequel la paroi latérale (19) pouvant être déplacée repose au niveau de la butée (33) et la butée (33) est disposée au-dessus de la plate-forme de chargement (9) et forme une distance entre la paroi avant et arrière (12) ainsi que la paroi latérale (19) mobile,
ainsi que
la paroi latérale (19) pouvant être déplacée peut être pivotée vers le haut au-delà de la paroi avant et arrière (12) au moyen du moyen de levage (20, 26), dans lequel la paroi latérale (19) mobile est guidée par le tube cinématique (21) et la barre cinématique (22), qui sont reliés à la paroi avant et arrière (12), **caractérisé en ce que** les tubes cinématiques (21) et les barres cinématiques (22) sont reliés par l'intermédiaire de plaques d'articulation (23, 24) à la paroi avant et arrière (12), dans lequel les tubes cinématiques (21) et les barres cinématiques (22) sont fixés par l'intermédiaire d'articulations (27, 28) de manière articulée au niveau des plaques d'articulation (23, 24) et dans lequel la butée (33) présente une pièce longitudinale (34) ainsi que des pièces transversales (35, 36) disposées de manière parallèle, qui sont disposées entre la pièce longitudinale (34) et la paroi avant et arrière (12).

2. Chariot de transport selon la revendication 1, **caractérisé en ce que** le moyen de levage (20, 22, 26, 35) est un vérin de levage (20, 35) pourvu d'un piston de levage (22, 26), qui est actionné de manière hydraulique ou pneumatique.

3. Chariot de transport selon la revendication 1 ou 2, **caractérisé en ce que** la paroi arrière (19) se compose de trois tiges s'étendant de manière verticale (14a, 14b, 14c) et de deux tiges s'étendant de manière horizontale (13), dans lequel les tiges (14a, 14b, 14c) sont disposées les unes par rapport aux autres de manière parallèle et les tiges s'étendant de manière horizontale (13) et les tiges s'étendant de manière verticale (14a, 14b, 14c) se croisent les unes les autres.

4. Chariot de transport selon la revendication 2 ou 3,
**caractérisé en ce que** le vérin de levage (20, 35) est fixé par l'intermédiaire d'une articulation (29) de manière articulée au niveau d'une plaque d'articulation (25) disposée au niveau de la paroi avant et arrière (12) .

5. Chariot de transport selon l'une quelconque des revendications précédentes, **caractérisé en ce que** la distance entre l'extrémité la plus basse de la paroi latérale (19) reposant au niveau de la butée (33) et la surface de chargement (11) se trouve entre 1070 mm et 1130 mm, de manière préférée entre 1185 mm et 1115 mm, de manière particulièrement préférée est de 1100 mm.

6. Chariot de transport selon l'une quelconque des revendications précédentes, **caractérisé en ce que** la distance entre la surface de chargement (11) et une pièce transversale (35) inférieure, tournée vers la surface de chargement (11), de la butée (33) se trouve entre 1260 mm et 1220 mm, de manière préférée entre 1250 mm et 1230 mm, de manière particulièrement préférée est de 1238 mm.

7. Chariot de transport selon l'une quelconque des revendications précédentes, **caractérisé en ce que** la distance entre l'articulation (27) de la barre cinématique (22) et la surface de chargement (11) se trouve entre 2540 mm et 2570 mm, de manière préférée entre 2550 mm et 2560 mm, de manière particulièrement préférée est de 2555 mm.

8. Chariot de transport selon l'une quelconque des revendications précédentes, **caractérisé en ce que** la distance entre l'articulation (28) du tube cinématique (21) et la surface de chargement (11) se trouve entre 2140 mm et 2170 mm, de manière préférée entre 2150 mm et 2160 mm, de manière particulièrement préférée est de 2157 mm.

9. Chariot de transport selon l'une quelconque des revendications 4 à 8, **caractérisé en ce que** la distance entre l'articulation (28, 29) du vérin de levage (20, 35) et la surface de chargement (11) se trouve entre 980 mm et 1030 mm, de manière préférée entre 995 mm et 1010 mm, de manière particulièrement préférée est de 1003 mm.

10. Chariot de transport selon l'une quelconque des revendications précédentes, **caractérisé en ce que** les longueurs de levage maximales du moyen de levage (20, 26) se trouvent entre 580 mm et 620 mm, de manière préférée entre 590 mm et 610 mm, de manière particulièrement préférée sont de 600 mm.

11. Chariot de transport selon l'une quelconque des revendications précédentes, **caractérisé en ce que** la distance entre l'extrémité la plus basse de la paroi latérale (19) pivotée au maximum vers le haut et la surface de chargement (11) se trouve entre 2900 mm et 3300 mm, de manière préférée entre 3000 mm et 3200 mm, de manière particulièrement préférée est de 3100 mm.

12. Chariot de transport selon l'une quelconque des revendications précédentes, **caractérisé en ce que** la distance entre l'articulation (27) de la barre cinématique (22) et le point final central de l'extrémité supérieure de la paroi latérale (19) mobile se trouve entre 1000 mm et 1400 mm, de manière préférée entre 1100 mm et 1300 mm, de manière particulièrement préférée est de 1147 mm.

13. Chariot de transport selon l'une quelconque des revendications précédentes, **caractérisé en ce que** la distance entre l'articulation (28) du tube cinématique (21) et la paroi latérale (19) mobile se trouve entre 1380 m et 1430 mm, de manière préférée entre 1400 mm et 1420 mm, de manière particulièrement préférée est de 1411 mm.
